# EUROPÄISCHE PATENTSCHRIFT

(11) **EP 2 722 089 B1**
(45) Veröffentlichungstag und Bekanntmachung des Hinweises auf die Patenterteilung: **29.04.2015**
(21) Anmeldenummer: 13189200.2
(22) Anmeldetag: 18.10.2013
(51) Int. Cl.: B01D 21/00, A23L 3/04, B65B 55/02

(54) **Vorrichtung zur thermischen Behandlung von Produkten mit Reinigung der Prozessflüssigkeit**
Device for the thermal treatment of products with cleaning of the process fluid
Dispositif de traitement thermique de produits avec nettoyage du liquide de processus

(30) Priorität: 22.10.2012 DE 102012219184
(43) Veröffentlichungstag der Anmeldung: 23.04.2014
(73) Patentinhaber: Krones AG, 93073 Neutraubling (DE)
(72) Erfinder: Münzer, Jan Karsten, 93073 Neutraubling (DE); Braun, Paul, 93073 Neutraubling (DE)
(74) Vertreter: Grünecker Patent- und Rechtsanwälte PartG mbB

(56) Entgegenhaltungen:
- EP-A1- 1 584 606
- WO-A1-94/26384
- DE-U1- 9 306 797
- US-B1- 6 209 591
- US-B1- 6 379 549

## Beschreibung

### Gebiet der Erfindung

Die vorliegende Erfindung betrifft eine Vorrichtung zur thermischen Behandlung von Produkten mit Reinigung der Prozessflüssigkeit.

### Hintergrund der Erfindung

Vorrichtungen zur thermischen Behandlung von Produkten in Behältern, beispielsweise Flaschen, PET-Behältern und Dosen sind im Stand der Technik bekannt. Beispielsweise können diese Vorrichtungen Pasteurisationsvorrichtungen, Wärme- oder Kühlvorrichtungen umfassen. Häufig treten diese Vorrichtungen auch in Kombination in einer großen, mehrzonigen Pasteurisationsvorrichtung auf, um die Produkte zumindest zeitweise auf verschiedene, definierte Temperaturniveaus zu bringen. Ein Beispiel ist der SHIELD Tunnelpasteur von Krones. Der Wärmeaustausch erfolgt im Allgemeinen durch Berieselung mit einer Prozessflüssigkeit, beispielsweise Wasser. Dabei soll unter dem Begriff Berieselung das Berieseln oder Besprühen der Behälter verstanden werden. Das verwendete Wasser wird in der Regel zumindest teilweise wiederverwendet. Es findet ein Umlaufbetrieb des Prozesswassers statt. Neben einer chemischen Wasserbehandlung wird eine mechanische Filterung des Wassers vorgenommen, bevor es erneut verwendet werden kann.

Zum Abscheiden von Partikeln, beispielsweise Glasscherben, Sand und/oder Sinkstoffen aus dem Prozesswasser werden typischerweise Siebbänder eingesetzt. Ein zonenübergreifendes Siebband, wie es im vielen Fällen eingesetzt wird, hat den Nachteil, dass hierzu eine horizontale Bandführung notwendig ist und entsprechend dazu die im Wesentlichen vertikale Wasserführung zu einer zusätzlichen Maschinenhöhe führt. Diese zusätzliche Höhe kann beispielsweise bis zu 400 mm betragen und einen erheblichen Mehraufwand im Bereich der Fördereinrichtungen zum Zu- und Abführen der Behälter bedeuten. Bei einer zonenweisen Abscheidung durch je ein Siebband pro Zone sind die anfallenden Kosten zur Abscheidung unverhältnismäßig hoch. Bei einfacheren Maschinen kommen auch Stecksiebe zum Einsatz.

Beide Arten von Sieben haben zusätzlich den Nachteil, dass sie beispielsweise durch Schwebstoffe, Schleimstoffe und auf dem Wasser schwimmende Stoffe verstopfen können. Das heißt diese Siebe können sich zusetzen. Die genannten Stoffe legen sich beispielsweise auf die Siebflächen und akkumulieren dort. Dort behindern diese Stoffe zunehmend den Durchsatz durch die Siebe. Die Siebe müssen regelmäßig auf Verstopfung kontrolliert und gereinigt werden. Insbesondere bei Verwendung von Stecksieben müssen die Stecksiebe gegebenenfalls herausgezogen und gereinigt werden, so dass Maschinen mit Stecksieben einen hohen Arbeits- und/oder Personaleinsatz bedingen. Typischerweise werden Schwebstoffe, Schleimstoffe und auf dem Wasser schwimmende Stoffe durch chemische Behandlung aufgelöst. Gelingt es aber beispielsweise nicht, Schleimstoffe oder ähnliche Stoffe durch chemische Behandlung aufzulösen oder gibt es eine Störung in der chemischen Wasserbehandlung, so setzen sich die Siebflächen der genannten Siebarten umso schneller zu.

Die Maschenweite eines Siebes begrenzt die erzielbare Durchflussmenge. Typischerweise können höchstens 2-3 mm große Partikel mit einem Siebband oder Stecksieb gefiltert werden. Nadelförmige Glasscherben können solche Maschen unter Umständen noch passieren, was dann zu einer Verstopfung der Düsen für die Berieselung führen kann. Ferner sind die Düsen wie auch Pumpenlaufräder häufig aus Kunststoff gefertigt. Durch Scherben oder andere feste Stoffe von weniger als 2-3 mm Durchmesser können aber Kunststoffdüsen von innen her verschleißen. Jedoch ist ein regelmäßiger Austausch der Düsen ebenso unerwünscht wie ein unkontrolliertes Spritzen etwa durch seitlichen Wasseraustritt aus ausgefransten oder beschädigten Düsen.

Angesichts der oben zitierten Probleme ist es somit Aufgabe der vorliegenden Erfindung, eine Abscheidemöglichkeit mit hoher Abscheideeffizienz und geringer Verstopfungsgefahr für eine oben zitierte Vorrichtung bereitzustellen.

### Beschreibung der Erfindung

Die oben genannte Aufgabe wird durch eine Vorrichtung zur thermischen Behandlung von Produkten in Behältern gemäß Anspruch 1 gelöst.

Dabei handelt es sich gemäß der Erfindung um eine Vorrichtung zur thermischen Behandlung von Produkten in Behältern, umfassend Zu- und Abführfördereinrichtungen für Behälter; wenigstens eine Behandlungszone zum Berieseln oder Besprühen der Behälter mit einer Prozessflüssigkeit, beispielsweise Wasser; und einen Umlaufkreislauf zum zumindest teilweisen Wiederverwenden der Prozessflüssigkeit, wobei der Umlaufkreislauf wenigstens eine Pumpe umfasst; wobei wenigstens eine Abscheideeinheit mit mehreren im Wesentlichen parallel angeordneten Lamellen zur Reinigung der Prozessflüssigkeit von Partikeln, beispielsweise Glasscherben und/oder Sand, wobei die Pumpe die Prozessflüssigkeit entlang der Lamellen pumpt.

Die Abscheideeinheit nutzt die Schwerkraftsedimentation für insbesondere kleine Partikel und Sinkstoffe, die in der Prozessflüssigkeit mitgeführt werden. Die Behandlung findet durch Berieseln oder Besprühen der Behälter von außen statt. Falls mehrere Behandlungszonen verwendet werden, können diese unterschiedliche Temperaturen aufweisen. Der Begriff Behandlungszone kann synonym für Berieselungszone oder Besprühungszone oder Temperaturzone stehen. Als Prozessflüssigkeit wird insbesondere Wasser verstanden, das auch als Prozesswasser bezeichnet wird. Es ist jedoch möglich, auch andere Prozessflüssigkeiten oder Gemische zu verwenden. Zur Reinigung, also insbesondere zur Abscheidung der Partikel aus der Prozessflüssigkeit wird der Dichteunterschied zwischen der Prozessflüssigkeit und den ungewünschten, abzuscheidenden Partikeln genutzt. Die Lamellen stellen dabei eine große Sedimentationsfläche in kompakter Form bereit, an denen die Prozessflüssigkeit vorbei fließt. Das Fließen der Flüssigkeit kann durch Pumpen mittels einer Pumpe unterstützt werden. An den Lamellen, also an den Sedimentationsflächen können die Partikel sedimentieren und sinken dann durch die Schwerkraft in der Flüssigkeit nach unten. Es versteht sich, dass die Pumpleistung so gewählt werden kann, dass die absinkenden Partikel nicht durch eine Strömung mitgerissen werden.

In der Vorrichtung können die Lamellen unter der Flüssigkeitsoberfläche vorgesehen sein und durch die Prozessflüssigkeit vollständig benetzt werden.

Die Lamellen können vollständig benetzt sein, also in der Flüssigkeit eingetaucht vorgesehen sein. Dadurch kann die Verschmutzung der Oberflächen der Lamellen deutlich reduziert werden und die Lamellen bleiben praktisch sauber von Rückständen. Rückstände können somit nicht auf den Lamellen antrocknen.

In der Vorrichtung können die Lamellen schräg zur Horizontalen unter einem Winkel α vorgesehen sein, wobei bevorzugt 30 °< α < 60° gilt.

Die Schrägstellung der Lamellen ermöglicht beispielsweise, bezüglich der Fließrichtung der Prozessflüssigkeit einen Strömungswiderstand bereitzustellen. Dabei kann der Winkel, unter dem die Lamellen zur Horizontalen stehen, gewählt werden.

In der Vorrichtung können die Lamellen einzeln oder in Form von Lamellenpaketen, die mehrere Lamellen umfassen, austauschbar sein.

Die Lamellen oder Lamellenpakete, d.h. Lamellengruppen, können mit geringem Aufwand gewartet oder ausgetauscht werden. Beispielsweise können die Lamellen oder Lamellenpakete von oben oder von der Seite einschiebbar sein.

In der Vorrichtung die Lamellen eine im Wesentlichen flüssigkeitsundurchlässige Oberfläche aufweisen, wobei die Oberfläche vorzugsweise beschichtet ist.

Aufgrund ihrer Oberflächeneigenschaften können die Lamellen als Sedimentationsflächen und damit gerade nicht als Sieb wirken. Die Porosität der Oberflächen kann dadurch möglichst gering gehalten werden. Hierdurch kann auch das Festsetzen von organischen Schwebstoffen wie etwa Schleim an den Lamellen an den Lamellen deutlich reduziert oder gar vermieden werden. Selbst wenn sich derartige Stoffe in geringem Umfang an den Oberflächen der Lamellen festsetzen würden, würden sie praktisch keine der Sedimentationseigenschaften der Lamellen stören. Damit kann gegenüber siebartigen Einschüben ein Vorteil erzielt werden.

In der Vorrichtung kann die Abscheideeinheit ferner einen austauschbaren Siebkasten am Boden der Abscheideeinheit zum Sammeln der Partikel umfassen.

Ein Siebkasten von ausreichender Größe kann bereit gestellt werden. Der Siebkasten kann typischerweise periodisch ausgetragen werden. Diese Austragung kann manuell oder automatisch erfolgen.

In der Vorrichtung kann die Abscheideeinheit ferner eine Überlaufkante umfassen, über die die gereinigte Prozessflüssigkeit wieder in den Umlaufkreislauf gelangt.

Mittels der Überlaufkante kann zusätzlich zu den Lamellen eine Kante vorgesehen sein, über die die Prozessflüssigkeit steigen muss, bevor sie in den Umlaufkreislauf zurück gelangt. Dabei steigt die Flüssigkeit im Wesentlichen in der Vertikalen an, wodurch sich noch eine zusätzliche Barriere für Partikel ergeben kann, die nicht bereits an den Lamellen sedimentiert sind.

Die Vorrichtung kann mehrere Behandlungszonen umfassen, wobei die wenigstens eine Abscheideeinheit mehreren Zonen zugeordnet sein kann.

Die Vorrichtung kann mehrere Behandlungszonen umfassen, wobei jeder Zone jeweils eine Abscheideeinheit wie oben beschrieben zugeordnet sein kann.

In der Vorrichtung kann eine Abscheideeinheit für mehrere Zonen vorgesehen sein, oder es kann jede Zone ihre eigene Abscheideeinheit haben. Entsprechend können mehrere Pumpen vorgesehen sein, um die Prozessflüssigkeit verschiedener Zonen separat zu pumpen oder mittels Pumpen die Umlaufkreisläufe mehrerer Zonen zu verbinden.

Die Vorrichtung kann eine Pasteurisationsvorrichtung, eine Wärmevorrichtung oder eine Kühlvorrichtung sein.

Ferner umfasst die Erfindung die Verwendung einer Abscheideeinheit zur Reinigung einer Prozessflüssigkeit von Partikeln, beispielsweise Glasscherben und/oder Sand, in einer Vorrichtung zur thermischen Behandlung von Produkten in Behältern, die Vorrichtung mit Zu- und Abführfördereinrichtungen für Behälter; wenigstens eine Behandlungszone zum Berieseln oder Besprühen der Behälter mit der Prozessflüssigkeit, beispielsweise Wasser; und mit einem Umlaufkreislauf zum zumindest teilweisen Wiederverwenden der Prozessflüssigkeit, wobei der Umlaufkreislauf wenigstens eine Pumpe umfasst; wobei die Abscheideeinheit mehrere im Wesentlichen parallel angeordnete Lamellen umfasst, wobei die Pumpe die Prozessflüssigkeit entlang der Lamellen pumpt.

Es gilt also, dass eine robuste und preiswerte Bereitstellung eine Abscheideeinheit ermöglicht wird, die einen relativ geringen Wartungsaufwand erfordert. Der Abscheidegrad dieser Abscheideeinheit kann deutlich bessere Abscheideleistungen als bei siebartigen Einheiten wie etwa Siebband oder Stecksieb bereitstellen. Auch wird die Abscheideleistung praktisch nicht durch die Partikelgröße beeinträchtigt. Die geringere Verstopfungsgefahr der Maschine verringert somit den Verschleiß von Düsen, Pumpen oder anderen Einbauten einer Vorrichtung zur thermischen Behandlung von Produkten. Es ist ebenso denkbar, dass Vorrichtungen oder Maschinen, die zu reinigendes Prozesswasser verwenden, eine derartige Abscheideeinheit nachrüsten können.

Im Folgenden werden Ausführungsformen der Erfindung unter Bezugnahme auf die Zeichnungen beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
Figur 1 zeigt einen Teil einer Pasteurisationsvorrichtung, die aus drei Behandlungszonen besteht.
Figur 2 zeigt eine Behandlungszone einer Pasteurisationsvorrichtung, mit einer Abscheideeinheit gemäß der vorliegenden Erfindung.
Figur 3 zeigt eine Seitenansicht der Abscheideeinheit aus Figur 2 gemäß der vorliegenden Erfindung.
Figur.4 zeigt eine Prinzipskizze mit einer perspektivischen Ansicht einer Abscheideeinheit 1, wie sie auch in Figur 3 gezeigt ist, unter Berücksichtigung der Strömung der Prozessflüssigkeit.

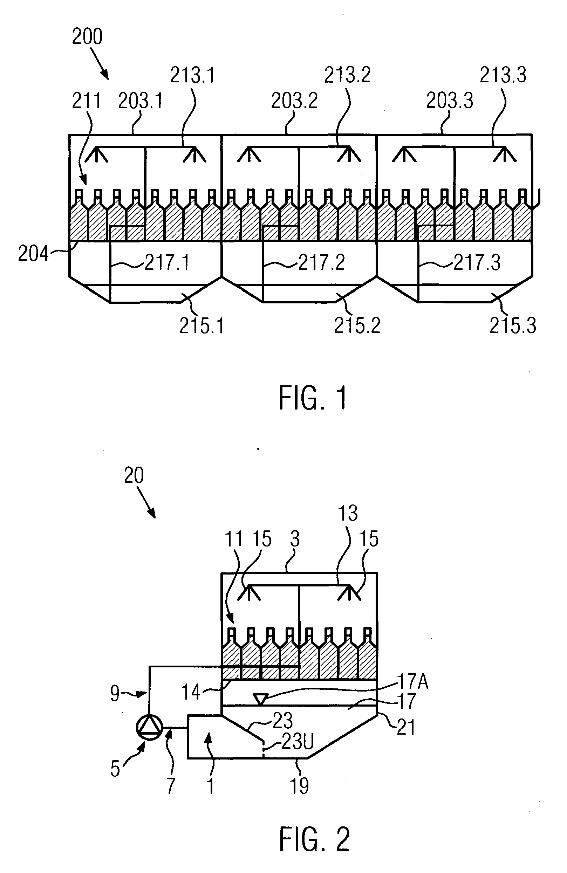

In der Figur 1 ist beispielhaft eine Pasteurisationsvorrichtung 200 mit mehreren Behandlungszonen 203.1, 203.2, 203.3 gezeigt, wie sie im Stand der Technik bekannt ist. Behälter wie etwa Flaschen mit dem Bezugszeichen 211 werden auf einem Förderband 204 hindurch transportiert, beispielsweise von links nach rechts in Figur 1. Die Behandlungszonen 203.1, 203.2 und 203.3 können unterschiedliche Temperaturen aufweisen, d.h. die Behälter 211 werden mit Prozesswasser mit unterschiedlichen Temperaturen von außen berieselt oder besprüht. Figur 1 zeigt Berieselungsvorrichtungen 213.1, 213.2 und 213.3. In diesem Beispiel werden die Behälter 211 von oben berieselt oder besprüht. Es ist jedoch ebenfalls möglich, die Behälter 211 seitlich zu besprühen. Das jeweils in jeder Behandlungszone verwendete Prozesswasser läuft von den Behältern 211 nach unten ab und sammelt sich jeweils in Sammelwannen 215.1, 215.2 und 215.3. Das Prozesswasser kann durch Pumpen (nicht gezeigt) über Rohre 217.1, 217.2 und 217.3 wieder zu den Berieselungsvorrichtungen 213.1, 213.2, 213.3 gepumpt werden und erneut verwendet werden. Vor einer erneuten Verwendung kann das Prozesswasser mittels Siebbändern oder Stecksieben (nicht gezeigt) in den jeweiligen Sammelwannen 215.1, 215.2 und 215.3 mechanisch gereinigt werden oder durch Siebstationen (nicht gezeigt) hindurch gepumpt werden. Eine chemische Reinigung des Prozesswassers von organischen Stoffen ist ebenfalls möglich. Die Behandlungszonen 203.1, 203.2 und 203.3 können kanalartig miteinander verbunden sein.

Die Figur 2 zeigt eine Vorrichtung 20 zur thermischen Behandlung von Produkten in Behältern 11 mit einer Abscheideeinheit 1 gemäß der vorliegenden Erfindung. Rein beispielhaft ist als Vorrichtung 20 in Figur 2 eine Pasteurisationsvorrichtung, Pasteur, mit nur einer Behandlungszone 3 gezeigt. Es versteht sich jedoch, dass die Vorrichtung ebenfalls eine Wärmevorrichtung für Behälter 11 oder eine Kühlvorrichtung für Behälter 11 umfassen kann. Es versteht sich ebenfalls, dass die Vorrichtung 20 mehr als eine Behandlungszone 3 umfassen kann. Eine oder mehrere, insbesondere auch alle der Behandlungszonen 3 können Abscheideeinheiten 1 umfassen.

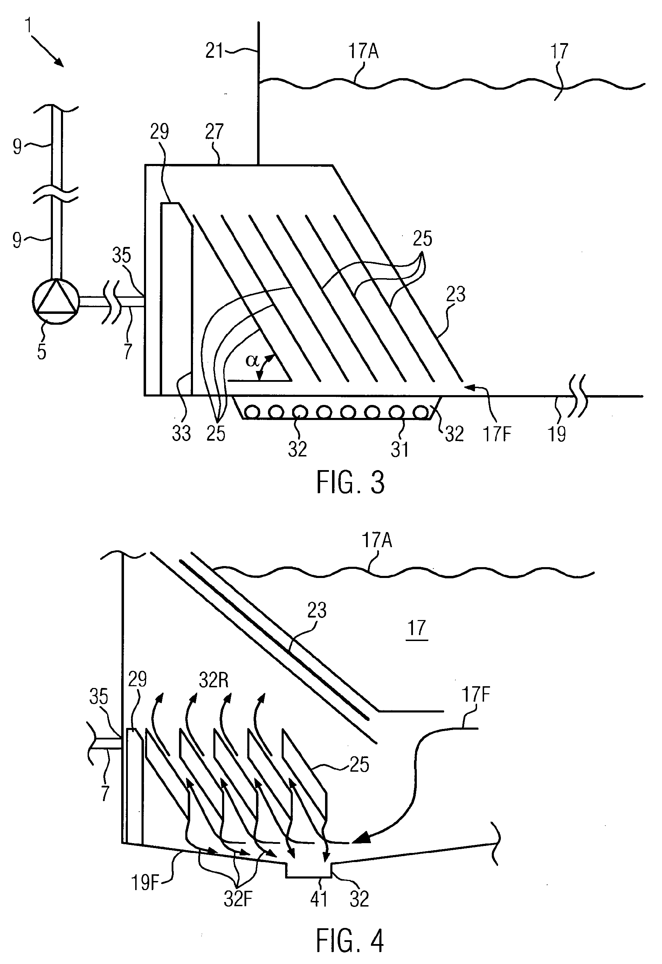

Die in der Figur 2 gezeigte Behandlungszone 3 zeigt eine Berieselungsanlage 13 mit Düsen 15 zum Besprühen oder Berieseln der Behälter 11. Rein beispielhaft werden hier die Behälter 11 von oben besprüht oder berieselt. Es ist aber ebenso möglich, die Behälter beispielsweise von der Seite zu besprühen. Als Prozessflüssigkeit 17 für das Berieseln oder Besprühen kann beispielsweise Wasser verwendet werden. Typischerweise kann das Wasser chemische Zusätze beinhalten, um beispielsweise organische Stoffe, die im Wasser schwimmen, aufzulösen. Die Behälter 11 werden in der Behandlungszone 3 der Vorrichtung 20 auf einem Förderband 14 transportiert. Die Vorrichtung 20 respektive die Behandlungszone 3 können Zu- und Abführfördereinrichtungen für Behälter umfassen (hier nicht gezeigt). In Figur 2 ist unterhalb des Förderbandes 14 eine Sammelwanne 21 gezeigt. In der Sammelwanne 21 ist Prozessflüssigkeit 17 mit einem Flüssigkeitsspiegel 17A gezeigt. Beispielhaft ist auf der linken Seite der Sammelwanne 21 eine Trennwand 23 gezeigt, die oberhalb des Bodens 19 der Sammelwanne 21 endet. Die Trennwand 23 führt also nicht ganz bis zum Boden 19 der Sammelwanne. Dadurch entsteht eine Öffnung 23U, durch die die Prozessflüssigkeit 17 in die Vorrichtung 1 fließen oder strömen kann. Das Fließen oder Strömen der Prozessflüssigkeit 17 kann durch Pumpen oder Absaugen unterstützt werden. Von der Abscheideeinheit 1 führt ein Verbindungsrohr 7 zu einer Pumpe 5, mit der ein Umlauf des Prozesswasser / der Prozessflüssigkeit 17 durch Pumpen erzeugt werden kann. Es versteht sich, dass rein beispielhaft nur eine Pumpe 5 in Figur 2 gezeigt ist. Es können jedoch ebenfalls mehrere Pumpen verwendet werden. Ebenso kann die Pumpe auch an einer anderen Stelle im Kreislauf des Prozesswassers vorgesehen sein. Ebenso ist es möglich (hier nicht gezeigt), dass ein Speicher mit frischer Prozessflüssigkeit 17 vorgesehen ist, um eventuelle Verluste an Prozessflüssigkeit 17 auszugleichen. Über ein Verbindungsrohr 9 wird der Kreislauf für die Prozessflüssigkeit 17 geschlossen und die Prozessflüssigkeit 17 wieder der Berieselungsanlage 13 zur erneuten Berieselung zugeführt. Die Vorrichtung kann ferner Wärmetauscher etc. umfassen, um beispielsweise die Prozessflüssigkeit 17 auf dem Weg zwischen der Abscheideeinheit 1 und der Berieselungsvorrichtung 13 auf ein bestimmtes Temperaturniveau durch Erwärmen oder Abkühlen zu bringen. Dafür eventuell benötigte Wärmetauscher sind nicht gezeigt. Die Abscheideeinheit 1 wird anhand von den Figuren 3 und 4 näher erläutert.

Die Figur 3 zeigt eine Seitenansicht der Abscheideeinheit 1 aus Figur 2 gemäß der vorliegenden Erfindung. In der Figur 3 ist ausschnittsweise die Sammelwanne 21 mit der Prozessflüssigkeit 17 und dem Flüssigkeitsspiegel 17A gezeigt. Die Trennwand 23 der Abscheideeinheit 1 führt nicht ganz bis zum Boden 19 der Sammelwanne 21. Mit dem Pfeil 17F ist eine Fließrichtung oder Strömungsrichtung der Prozessflüssigkeit 17 angedeutet. Dieser Fluss oder die Strömung 17F der Prozessflüssigkeit 17 kann durch die Pumpe 5 erzeugt werden. Der Einsatz einer Absaugvorrichtung oder einer kombinierten Pump- und Absaugvorrichtung (nicht gezeigt) ist ebenfalls möglich. Die Figur 3 zeigt mehrere schräg stehende Lamellen 25 die im Wesentlichen parallel angeordnet sind. Der Abstand zwischen den Lamellen 25 ist im Wesentlichen konstant. Es ist aber ebenso möglich unterschiedliche Abstände zu wählen oder gruppenweise unterschiedliche Abstände für die Lamellen 25 zu wählen. In Figur 3 sind rein beispielhaft sechs Lamellen dargestellt. Es versteht sich jedoch, dass ebenso eine andere Zahl von Lamellen gewählt werden kann. Die Prozessflüssigkeit 17 strömt entlang der Lamellen 25. Über eine Überlaufkante 29 strömt die Prozessflüssigkeit 17 zur Pumpe 5. Die Prozessflüssigkeit 17 kann die Abscheideeinheit 1 nur an der Öffnung 35 wieder verlassen. Von der Öffnung 35 kann die Prozessflüssigkeit 17 durch das Rohr 7 zur Pumpe 5 strömen und von dort über das Rohr 9 wieder zu einer Behandlungszone der Vorrichtung 20, wie anhand von Figur 1 diskutiert. Die Abscheideeinheit 1 hat eine obere Begrenzung, die mit dem Bezugszeichen 27 versehen ist. Die Überlaufkante 29 ist rein beispielhaft oberhalb des Endes der Lamellen 25 dargestellt. Es ist jedoch ebenso möglich, das obere Niveau der Überlaufkante 29 entsprechend den oberen Kanten der Lamellen 25 zu wählen. Die Lamellen 25 haben typischerweise die gleiche Größe/Abmessungen. In Figur 3 sind die Lamellen 25 jeweils auf derselben Höhe angebracht. Das bedeutet, dass jeweils das untere und das obere Ende jeder Lamelle denselben Abstand in Bezug auf den Boden 19 der Sammelwanne 21 besitzen. Links von den Lamellen 25 ist eine Trennkante 33 vorgesehen, die zusammen mit der Überlaufkante 29 eine Abtrennung der Lamellen 25 gegenüber dem Auslass der Abscheideeinheit 1, d. h. der Öffnung 35 bildet.

Die Figur 3 zeigt ferner einen Siebkasten 31. Dieser ist typischerweise austauschbar gestaltet. Gezeigt sind ebenso Partikel 32, die aufgrund der Schwerkraft entlang der Lamellen 25 nach unten sedimentieren können. Dabei kann der Begriff Partikel 32 beispielsweise Glasscherben, Sand oder kleinere Metallteilchen umfassen. Der Siebkasten 31 kann beispielsweise regelmäßig geleert werden. Es ist zwar im Prinzip möglich, auf einen Siebkasten wie den Siebkasten 31 zu verzichten, doch müsste dann nach einer bestimmten Betriebsdauer der Vorrichtung 20 die Abscheideeinheit 1 geöffnet werden und der Boden der Abscheideeinheit 1 müsste gesäubert werden. Die Figur 3 zeigt ferner, dass die Lamellen 25 unter einem Winkel α zur Horizontalen vorgesehen sind. Der Winkel α kann beispielsweise 30°< α < 60 ° betragen, um das Sedimentieren der Partikel 32 unter Einwirkung der Schwerkraft entlang der Flächen der Lamellen 25 zu unterstützen.

Die Figur 4 zeigt eine Prinzipskizze mit einer perspektivischen Ansicht einer Abscheideeinheit 1 wie sie auch in Figur 3 gezeigt ist. Gleiche Elemente wie in Figur 3 sind dabei mit gleichen Bezugszeichen bezeichnet. Dabei wird insbesondere die Strömung der Prozessflüssigkeit 17 durch den Pfeil 17F angedeutet. Dieser Pfeil deutet den Fluss oder die Strömung der Prozessflüssigkeit 17 entlang der Lamellen 25 an. Mit den Pfeilen 32F wird das Sedimentieren, also Heruntersinken von Partikeln angedeutet. An der Oberkante der Lamellen wird mit den Pfeilen 32R eine gereinigte Prozessflüssigkeit 17 angedeutet. Dabei versteht es sich, dass eine gereinigte Prozessflüssigkeit 17 weniger Partikel enthält als vor dem Fluss über die Sedimentationsflächen der Lamellen 25. Im Unterschied zu Figur 3 ist in der Figur der Siebkasten 41 schmaler als der Siebkasten 31 in Figur 3. Dadurch überdeckt die Breite des Siebkastens 41 in Figur 4 weniger Lamellen 25 als in der Figur 3. Der Boden 19F ist jedoch mit einer leichten Schräge gezeichnet, sodass Partikel in den Siebkasten 41 hineinrutschen können. Wie auch in Figur 3 ist der Siebkasten 41 in Figur 4 austauschbar.

## Patentansprüche

1. Vorrichtung (20) zur thermischen Behandlung von Produkten in Behältern (11), umfassend Zu- und Abführfördereinrichtungen für Behälter (11); wenigstens eine Behandlungszone (3) zum Berieseln oder Besprühen der Behälter (11) mit einer Prozessflüssigkeit (17), und einen Umlaufkreislauf zum zumindest teilweisen Wiederverwenden der Prozessflüssigkeit (17), wobei der Umlaufkreislauf wenigstens eine Pumpe (5) umfasst; **gekennzeichnet durch**
wenigstens eine Abscheideeinheit (1) mit mehreren parallel angeordneten Lamellen (25) zur Reinigung der Prozessflüssigkeit (17) von Partikeln (32), wobei die Pumpe (5) die Prozessflüssigkeit (17) entlang der Lamellen (25) pumpt.

2. Vorrichtung (20) gemäß Anspruch 1, wobei die Lamellen (25) unter der Flüssigkeitsoberfläche vorgesehen sind und durch die Prozessflüssigkeit (17) vollständig benetzt werden.

3. Vorrichtung (20) gemäß einem der Ansprüche 1 - 2, wobei die Lamellen (25) schräg zur Horizontalen unter einem Winkel α vorgesehen sind.

4. Vorrichtung (20) gemäß wenigstens einem der Ansprüche 1 - 3, wobei die Lamellen (25) einzeln oder in Form von Lamellenpaketen, die mehrere Lamellen (25) umfassen, austauschbar sind.

5. Vorrichtung (20) gemäß wenigstens einem der Ansprüche 1 - 4, wobei die Lamellen (25) eine flüssigkeitsundurchlässige Oberfläche aufweisen, wobei die Oberfläche vorzugsweise beschichtet ist.

6. Vorrichtung (20) gemäß Anspruch 1 oder 5, wobei die Abscheideeinheit (1) ferner einen austauschbaren Siebkasten (31, 41) am Boden (19) der Abscheideeinheit (1) zum Sammeln der Partikel (32) umfasst.

7. Vorrichtung (20) gemäß wenigstens einem der Ansprüche 1 - 6, wobei die Abscheideeinheit (1) ferner eine Überlaufkante (29) umfasst, über die die gereinigte Prozessflüssigkeit (17) wieder in den Umlaufkreislauf gelangt.

8. Vorrichtung (20) gemäß wenigstens einem der Ansprüche 1 - 7 mit mehreren Behandlungszonen (3) zum Berieseln oder Besprühen von Behältern (11), wobei die wenigstens eine Abscheideeinheit (1) mehreren Zonen zugeordnet ist.

9. Vorrichtung (20) gemäß wenigstens einem der Ansprüche 1 - 7 mit mehreren Behandlungszonen (3) zum Berieseln oder Besprühen von Behältern (11), wobei jeder Zone jeweils eine Abscheideeinheit (1) gemäß den Ansprüchen 1 - 7 zugeordnet ist.

10. Vorrichtung (20) gemäß wenigstens einem der Ansprüche 1 - 9, wobei die Vorrichtung (20) eine Pasteurisationsvorrichtung, eine Wärmevorrichtung oder eine Kühlvorrichtung ist.

11. Vorrichtung (20) gemäß Anspruch 1, wobei die Prozessflüssigkeit (17) Wasser ist.

12. Vorrichtung (20) gemäß Anspruch 1, wobei die Partikel Glasscherben und/oder Sand sind.

13. Vorrichtung (20) gemäß Anspruch 3, wobei 30°< α < 60° gilt.

14. Verwendung einer Abscheideeinheit (1) zur Reinigung einer Prozessflüssigkeit (17) von Partikeln (32) in einer Vorrichtung (20) gemäß Anspruch 1; wobei die Abscheideeinheit (1) mehrere parallel angeordnete Lamellen (25) umfasst, wobei die Pumpe (5) die Prozessflüssigkeit (17) entlang der Lamellen (25) pumpt.

15. Verwendung einer Abscheideeinheit (1) zur Reinigung einer Prozessflüssigkeit (17) von Partikeln gemäß Anspruch 14, wobei die Partikel Glasscherben und/oder Sand sind.

## Claims

1. Device (20) for thermally treating products in containers (11), comprising supply and discharge conveyors for containers (11); at least one treatment zone (3) for irrigating or spraying the containers (11) with a process liquid (17) and a circulation circuit for at least partially reusing the process liquid (17), the circulation circuit comprising at least one pump (5); **characterized by**
at least one separation unit (1) with several parallel lamellae (25) for cleaning the process liquid (17) from particles (32), the pump (5) pumping the process liquid (17) along the lamella (25).

2. Device (20) according to claim 1, wherein the lamellae (25) are provided underneath the liquid surface and are completely wetted by the process liquid (17).

3. Device (20) according to one of claims 1 - 2, wherein the lamellae (25) are provided obliquely to the horizontal line at an angle α.

4. Device (20) according to at least one of claims 1 - 3, wherein the lamellae (25) are exchangeable individually or in the form of lamella packs which comprise several lamellae (25).

5. Device (20) according to at least one of claims 1 - 4, wherein the lamellae (25) comprise a liquid-tight surface, the surface being coated.

6. Device (20) according to claim 1 or 5, wherein the separation unit (1) furthermore comprises an exchangeable screen box (31, 41) at the bottom (19) of the separation unit (1) for collecting the particles (32).

7. Device (20) according to at least one of claims 1 - 6, wherein the separation unit (1) furthermore comprises an overflow edge (29) via which the cleaned process liquid (17) gets into the circulation circuit again.

8. Device (20) according to at least one of claims 1 - 7 with several treatment zones (3) for irrigating or spraying containers (11), wherein the at least one separation unit (1) is associated with several zones.

9. Device (20) according to at least one of claims 1 - 7 with several treatment zones (3) for irrigating or spraying containers (11), wherein one separation unit (1) according to claims 1 - 7 is associated with each zone.

10. Device (20) according to at least one of claims 1 - 9, wherein the device (20) is a pasteurization device, a heating device, or a cooling device.

11. Device (20) according to claim 1, wherein the process liquid (17) is water.

12. Device (20) according to claim 1, wherein the particles are broken glass and/or sand.

13. Device (20) according to claim 3, where 30°< α < 60°.

14. Use of a separation unit (1) for cleaning a process liquid (17) from particles (32) in a device (20) according to claim 1 wherein the separation unit (1) comprises several parallel lamellae (25), the pump (5) pumping said process liquid (17) along the lamellae (25).

15. Use of a separation unit (1) for cleaning a process liquid (17) from particles according to claim 14, wherein the particles are broken glass and/or sand.

## Revendications

1. Dispositif (20) pour le traitement thermique de produits dans des récipients ou contenants (11), comprenant des dispositifs de transport d'amenée et d'évacuation pour contenants (11), au moins une zone de traitement (3) pour arroser ou soumettre à pulvérisation les contenants (11) avec un liquide de processus (17), et un circuit de recirculation pour la réutilisation, au moins partielle, du liquide de processus (17), le circuit de recirculation comportant au moins une pompe (5), **caractérisé par**
au moins une unité de séparation (1) comportant plusieurs lamelles (25) agencées parallèlement les unes aux autres, pour le nettoyage du liquide de processus (17) en le débarrassant de particules (32), la pompe (5) assurant le pompage du liquide de processus (17) le long des lamelles (25).

2. Dispositif (20) selon la revendication 1, dans lequel les lamelles (25) sont prévues sous la surface du liquide et sont mouillées en totalité par le liquide de processus (17).

3. Dispositif (20) selon l'une des revendications 1 - 2, dans lequel les lamelles (25) sont prévues de manière inclinée d'un angle α par rapport à l'horizontale.

4. Dispositif (20) selon l'une au moins des revendications 1 - 3, dans lequel les lamelles (25) peuvent être échangées ou remplacées individuellement ou sous la forme de paquets de lamelles, qui comportent plusieurs lamelles (25).

5. Dispositif (20) selon l'une au moins des revendications 1 - 4, dans lequel les lamelles (25) présentent une surface imperméable aux liquides, la surface étant de préférence revêtue.

6. Dispositif (20) selon la revendication 1 ou la revendication 5, dans lequel l'unité de séparation (1) comprend, par ailleurs, un caisson à tamis (31, 41) interchangeable sur le fond (19) de l'unité de séparation (1), pour assurer la collecte des particules (32).

7. Dispositif (20) selon l'une au moins des revendications 1 - 6, dans lequel l'unité de séparation (1) comporte, par ailleurs, un bord déversoir (29) pardessus lequel le liquide de processus (17) parvient à nouveau dans le circuit de recirculation.

8. Dispositif (20) selon l'une au moins des revendications 1 - 7, comprenant plusieurs zones de traitement (3) pour arroser ou soumettre à pulvérisation des contenants (11), dispositif dans lequel ladite au moins une unité de séparation (1) est affectée à plusieurs zones.

9. Dispositif (20) selon l'une au moins des revendications 1 - 7, comprenant plusieurs zones de traitement (3) pour arroser ou soumettre à pulvérisation des contenants (11), dispositif dans lequel à chaque zone est affectée respectivement une unité de séparation (1) selon l'une des revendications 1 - 7.

10. Dispositif (20) selon l'une au moins des revendications 1 - 9, dans lequel le dispositif (20) est un dispositif de pasteurisation, un dispositif de chauffage ou un dispositif de refroidissement.

11. Dispositif (20) selon la revendication 1, dans lequel le liquide de processus (17) est de l'eau.

12. Dispositif (20) selon la revendication 1, dans lequel les particules sont des éclats de verre et/ou du sable.

13. Dispositif (20) selon la revendication 3, dans lequel on a la relation 30°< α <60°.

14. Utilisation d'une unité de séparation (1) pour le nettoyage d'un liquide de processus (17) en le débarrassant de particules (32) dans un dispositif (20) selon la revendication 1, l'unité de séparation (1) comportant plusieurs lamelles (25) agencées parallèlement les unes aux autres, et la pompe (5) assurant le pompage du liquide de processus (17) le long des lamelles (25).

15. Utilisation d'une unité de séparation (1) pour le nettoyage d'un liquide de processus (17) en le débarrassant de particules, selon la revendication 14, les particules étant des éclats de verre et/ou du sable.
